# EUROPÄISCHE PATENTSCHRIFT

(11) **EP 0 938 389 B1**
(45) Veröffentlichungstag und Bekanntmachung des Hinweises auf die Patenterteilung: **06.06.2001**
(21) Anmeldenummer: 97950080.8
(22) Anmeldetag: 03.11.1997
(51) Int. Cl.: B21C 37/08, B21C 37/083

(54) **VERFAHREN ZUM UMMANTELN EINES KUNSTSTOFFROHRES MIT EINEM METALLBAND**
METHOD FOR WRAPPING A METAL STRIP AROUND A PLASTIC TUBE
PROCEDE POUR ENVELOPPER UN TUBE PLASTIQUE D'UNE BANDE METALLIQUE

(30) Priorität: 13.11.1996 DE 19646859
(43) Veröffentlichungstag der Anmeldung: 01.09.1999
(73) Patentinhaber: Hewing GmbH, 48607 Ochtrup (DE)
(72) Erfinder: RIESSELMANN, Franz-Josef, D-49393 Lohne (DE)
(74) Vertreter: Hilleringmann, Jochen, Dipl.-Ing.
(86) Internationale Anmeldenummer: EP9706063
(87) Internationale Veröffentlichungsnummer: WO9820989

(56) Entgegenhaltungen:
- DE-A- 4 310 272
- DE-C- 19 515 853
- US-A- 2 975 087
- PATENT ABSTRACTS OF JAPAN vol. 007, no. 104 (M-212), 6.Mai 1983 & JP 58 025893 A (SUMITOMO KEIKINZOKU KOGYO KK), 16.Februar 1983,

## Beschreibung

Die Erfindung betrifft ein Verfahren zum Ummanteln eines Kunststoffrohres mit einem Metallband nach dem Oberbegriff des Anspruchs 1.

Zur Herstellung von Kunststoff-Metall-Verbundrohren ist es unter anderem erforderlich, ein Metallband kraftschlüssig um ein Kunststoff-Innenrohr herum zu formen. Nach dem Ummanteln des Kunststoff-Innenrohres mit dem Metallband kann dann noch von außen ein weiteres Kunststoffrohr aufextrudiert werden. Ein derartiges Verbundrohr vereint die Vorteile eines reinen Kunststoffrohres und eines Metallrohres, indem es die Flexibilität eines Kunststoffrohres aufweist und durch die Metallzwischenlage diffusionssperrend wie ein Metallrohr ist.

Verfahren zur Herstellung von Kunststoff-Metall-Verbundrohren sind beispielsweise aus DE 20 45 973 A1, DE 29 23 544 C2, DE 32 25 869 A1, DE 43 10 272 A1 und EP 0 639 411 A1 bekannt.

Ein Problem bei der Ummantelung eines Kunststoffrohres mit einem Metallband besteht in der Verbindung der Metallband-Längsränder nach dem Umlegen um das Kunststoffrohr. Die Längsränder des Metallbandes werden hierzu zumeist miteinander verschweißt. Dabei besteht das Problem darin, daß durch das Verschweißen die Gefahr der Beschädigung des Kunststoffrohres besteht.

Im Stand der Technik ist es bekannt, daß sich die Längsränder des sich um das Kunststoffrohr herumgelegten Metallbandes überlappen und miteinander verschweißt werden. Aus der oben genannten DE 29 23 544 C2 ist es bekannt, die Längsränder des Metallbandes auf Stoß anliegend miteinander zu verschweißen. Dies setzt eine recht genaue Prozeßsteuerung und Führung des Metallbandes sowie der aneinanderliegenden Metallband-Längsränder voraus.

In den ebenfalls oben genannten DE 20 45 973 A1 und DE 32 25 869 A1 wird vorgeschlagen, zur Herstellung eines Metallrohres aus einem Metallband die Längsränder des Metallbandes zu einer Seite desselben abzuwinkeln, um dann das derart geformte Metallband zu einem Rohr zu formen, wobei die abgewinkelten Längsränder aneinanderliegen. In diesem Zustand werden die Längsränder an ihren freien Enden miteinander verschweißt. Dabei erstreckt sich die Schweißverbindung ausschließlich im Bereich der freien Längsränderenden; im übrigen Bereich der Längsränder, insbesondere an deren Übergängen zum dazwischenliegenden Mittelabschnitt des Metallbandes, sind diese also nicht miteinander verbunden. Die Schweißnaht erstreckt sich also nicht über die gesamte Höhe der Längsränder. Der nach dem Verschweißen noch verbleibende aus den Längsrändern bestehende radiale Überstand wird umgelegt. In diesem Bereich weist das Metallrohr - wie übrigens auch bei einem mit überlappten Längsrändern zu einem Rohr geformten Metallband - eine Verdickung und damit einen unregelmäßigen Querschnitt auf, was nicht wünschenswert ist.

Auch bei dem aus DE 43 10 272 A1 bzw. EP 0 639 411 A1 bekannten Verfahren wird das um das Kunststoff-Innenrohr gelegte Metallband an seinen nach außen hochstehenden Bandkanten miteinander verschweißt.

Aus DE 195 15 853 C1 ist schließlich ein Verfahren zum Ummanteln eines Kunststoffrohres mit einer mit abgewinkelten Längsrändern versehenen Metallummantelung bekannt, bei dem das Volumen der abgewinkelten Längsränder und die Schweißenergie derart gewählt werden, daß das Längsnaht-verschweißte Metallband im Bereich der Längsnaht eine im wesentlichen in der Außenumfangsfläche des übrigen Metallbandes liegende Außenfläche aufweist. Bei diesem bekannten Verfahren ist vorgesehen, das "Schweißvolumen" und die Schweißenergie in bestimmter Weise aufeinander abzustimmen. Damit wird erreicht, daß durch das Verschweißen einerseits die abgewinkelten Längsränder miteinander verbunden werden und andererseits der sich durch die abgewinkelten Längsränder ergebende radiale Überstand "heruntergeschweißt" wird. Das Schweißvolumen wird bestimmt durch die Höhe der Längsränder und deren Dicke, d. h. durch die Dicke des Metallbandes. Die Höhe der Längsränder, d. h. der radiale Überstand der Längsränder des Metallbandes wird dabei durch die Breite der vor dem Umlegen des Metallbandes abgewinkelten Längsränder bestimmt. Die in die Schweißnaht eingebrachte Schweißenergie ist zum einen abhängig von der von der Schweißvorrichtung abgegebenen Energie und der Geschwindigkeit der Relativbewegung zwischen Schweißvorrichtung und Metallband.

Die Schweißenergie pro Vorschub-Wegeinheit wird also in Abhängigkeit von dem Schweißvolumen derart gewählt, daß nach dem Schweißvorgang die Längsränder bis zur Außenumfangsfläche des übrigen Metallbandes heruntergeschweißt sind, nach dem Verschweißen also trotz abgewinkelter Längsränder des Metallbandes kein nennenswerter Außenüberstand der Metallummantelung zu verzeichnen ist. Die abgewinkelten Längsränder des Metallbandes sind verhältnismäßig kurz, was erhöhte Anforderungen an die Präzision der Rollenformstation zum Formen des Metallbandes zwecks Umschließens des Kunststoff-Innenrohres stellt. Ferner kann bei diesem Verfahren der Fall eintreten, daß bei nicht ausreichend gegenüber den Metallband-Besäumungsrollen zentriertem Metallband die abgewinkelten Längsränder ungleiche Breiten aufweisen, was wiederum zu Unregelmäßigkeiten bei der Ausbildung der Schweißnaht führen kann.

Der Erfindung liegt die Aufgabe zugrunde, ein Verfahren zum Ummanteln eines Kunststoffrohres mit einem Metallband anzugeben, das eine bessere Führung an den abgewinkelten Längsrändern beim Formen des Metallbandes um das Kunststoff-Innenrohr und bei der Verschweißung ermöglicht, und bei dem auch bei fehlerhafter Zentrierung des Metallbandes gegenüber den Besäumungsrollen bei der Herstellung der abgewinkelten Längsränder gleiche Breiten der beiden Längsränder und eine exakte Einstellung des Volumens der abgewinkelten Längsränder für eine regelmäßige Schweißnaht sichergestellt werden.

Zur Lösung dieser Aufgabe wird mit der Erfindung ein Verfahren mit den Verfahrensschritten des Anspruchs 1 vorgeschlagen; Verfahrensschritte gemäß vorteilhafter Weiterbildungen der Erfindung sind jeweils in den Unteransprüchen angegeben.

Bei dem erfindungsgemäßen Verfahren werden dem Metallband abgewinkelte Längsränder verliehen, die länger sind als es für die Herstellung der Längsnaht erforderlich ist. In diesem Zustand wird das Metallband um das Kunststoff-Innenrohr gelegt, wobei sich die verhältnismäßig langen Längsränder vorteilhaft auf den Rollenformvorgang auswirken. Nach dem Formen des Metallbandes zu einem Rohr liegen die Längsränder radial nach außen weisend aneinander. In diesem Zustand werden die Längsränder besäumt, indem sie mittels Schneidrollen o. dgl. mechanische Schneidvorrichtung oder mittels Laser gekürzt werden. Durch das Kürzen der Längsränder bzw. des Überstandes ist es möglich, das Volumen der abgewinkelten Längsränder und die Schweißenergie derart aufeinander abzustimmen, daß das Längsnaht-verschweißte Metallband nach dem Verschweißen im Bereich der Längsnaht eine im wesentlichen in der Außenumfangsfläche der Metallummantelung liegende Außenfläche aufweist.

Das Beschneiden der radial abstehenden Längsränder unmittelbar vor deren Verschweißung hat den Vorteil, daß die Stirnflächen der Längsränder frei von Oxidationsprodukten und Verschmutzungen sind.

Mit Hilfe des erfindungsgemäßen Verfahrens wird es möglich, die Dicke des Metallbandes, das normalerweise aus Aluminium besteht, um etwa die Hälfte der Dicke der gegenwärtig für Kunststoff-Metall-Verbundrohre verwendeten Aluminium-Metallbänder zu reduzieren. Durch die hochstehenden Längsränder wird eine ausreichend große Anlagefläche erreicht, die auch dann noch ausreichend ist, wenn, was in der Praxis vorkommt, die Längsränder des Metallbandes über die Länge des Verbundrohres betrachtet, wellenförmige Radialversätze aufweisen. Die während des Formens des Metallbandes noch relativ langen bzw. breiten abgewinkelten Längsränder haben den Vorteil, das Metallband bis zur Verschweißung besser führen und damit formen zu können. Nach dem Kürzen des radialen Überstands der aneinanderliegenden Längsränder des Metallbandes stellen diese einerseits ein ausreichend großes Volumen an Material zur Bildung einer nicht zu weit nach innen vorstehende, aber dennoch ausreichend ausgeprägten Schweißnahtwurzel (nach innen weisender wulstartiger Vorsprung) mit lediglich geringen beidseitigen Einschneidungen zum jeweils angrenzenden Metallband und andererseits ein derart geringes Materialvolumen dar, so daß nach dem Verschweißen kein nennenswerter radialer Überstand mehr zu verzeichnen ist. Es wird das gesamte Material der Längsränder bei der Verschweißung aufgeschmolzen und für die Ausbildung der Schweißlängsnaht und somit für eine Schaffung einer innigen Verbindung der lateralen Endbereiche des Mittelabschnittes des Metallbandes verwendet. Die abgewinkelten Längsränder haben darüber hinaus den Vorteil, das Metallband bis zur Verschweißung besser führen zu können.

Ein entscheidender Vorteil des erfindungsgemäßen Verfahrens ist darin zu sehen, daß durch die erfindungsgemäße Abstimmung von Schweißenergie und Schweißvolumen eine Schweißnaht erzeugt wird, die nennenswerte Vorwölbungen weder nach außen noch nach innen aufweist. Letzteres hat den Vorteil, daß das bereits gefertigte Innenrohr keine oder nur eine unerhebliche Querschnittsverformung im Bereich der Schweißnaht erfährt. Die lediglich geringe Vorwölbung nach außen hin beeinträchtigt in keiner Weise die Aufbringung der Kunststoffschicht für das Außenrohr, das damit ebenfalls im Querschnitt über 360° hinweg gleichmäßig ist.

Der Hauptvorteil des erfindungsgemäßen Verfahrens ist darin zu sehen, daß auf eine mechanische Nachbearbeitung der Längsnaht des Metallbandes verzichtet werden kann. Dies gilt im übrigen auch für die Metallummantelung selbst auch; denn auch das um das Kunststoffrohr herumgelegte und verschweißte Metallband bedarf keinerlei Nachkalibrierung oder Durchmesserreduktion. Der Grund hierfür ist insbesondere darin zu sehen, daß wegen der abgewinkelten Längsränder das Metallband auch im Bereich der Schweißnaht dichter an dem Kunststoff-Innenrohr anliegen kann, als dies beispielsweise bei sich überlappenden Längsrändern oder auf Stoß liegenden Längsrändern der Fall ist, da die Schweißvorrichtung wegen der abstehenden Längsränder einen größeren Abstand zum Kunststoff-Innenrohr aufweisen kann. Damit sind die Hitzeeinwirkungen auf das Innenrohr beim Verschweißen der Längsränder des Metallbandes reduziert, weshalb das Metallband selbst auch im Nahtbereich recht dicht am Innenrohr anliegen kann. Durch die im Anschluß an die Verschweißung erfolgende Abkühlung des Metallbandes schrumpft dieses, womit sich die Formschlüssigkeit des Verbundes zwischen Kunststoffrohr und Metallband weiter verbessert.

Die Schweißenergie und das Schweißvolumen werden vorteilhafterweise derart eingestellt, daß die Schweißnaht an ihrer Außenseite eine zweckmäßigerweise geringe flache Vorwölbung aufweist, die über die (gedachte) Verlängerung der von dem Metallband-Mittelabschnitt gebildeten Außen-(Zylinder-)Fläche geringfügig übersteht (vorzugsweise bis etwa 1/10 bis 1/5 der Metallbanddicke). Die Schweißwurzel weist dabei vorzugsweise zwei Vorwölbungen auf, zwischen denen sich ein zurückgezogener Bereich befindet. Der zurückgezogene Bereich liegt an seiner tiefsten Stelle etwa in Verlängerung der Innenumfangsfläche des Metallband-Innenabschnitts. Die beiden seitlich davon angeordneten Vorwölbungen stehen etwa um 1/5 der Metallbanddicke nach innen über.

Alternativ werden die Schweißenergie und das Schweißvolumen derart aufeinander abgestimmt, daß sich an der Außenseite der Schweißnaht eine Abflachung einstellt und die Schweißwurzel eine der Abflachung gegenüberliegende Vorwölbung aufweist.

Wie oben erwähnt, sind die Längsränder des Metallbandes zu einer Seite hin abgewinkelt. Zwischen den beiden Längsrändern erstreckt sich der Mittelabschnitt des Metallbandes. Die Winkel, um die beiden Längsränder des Metallbandes abgekantet sind, können unterschiedlich gewählt werden, wobei die Summe beider Winkel etwa 180° beträgt. Sind die beiden Winkel gleich, nämlich jeweils ca. 90°, so stehen die Längsränder bei um das Kunststoffrohr gelegtem Metallband radial ab.

In vorteilhafter Weiterbildung der Erfindung ist vorgesehen, daß die abstehenden Längsränder durch Formen eines glatten Metallbandes gebildet werden. Zu diesem Zweck wird das Metallband durch mindestens eine Formstation hindurchgeführt. Diese Formstation weist zwei um parallele Drehachsen drehbar gelagerte Formrollen auf, deren Umfangsflächen einander gegenüberliegen. In den Zwischenraum zwischen die Umfangs- bzw. Formflächen dieser beiden Formrollen wird nun das zu verformende Metallband eingeführt, so daß das vorher unverformte Metallband abgewinkelte Längsränder aufweist.

Die Verformung des Metallbandes kann entweder kontinuierlich im Durchlaufverfahren erfolgen (wozu insbesondere eine Formstation der obigen Art verwendet wird) oder aber diskontinuierlich erfolgen, indem Längenabschnitte des Metallbandes einem Formwerkzeug zugeführt und abschnittsweise verformt werden.

Für die Herstellung der Längsränder von Vorteil ist es, wenn dem Metallband zunächst abgestufte Längsseiten verliehen werden. Diese Abstufung ist vorteilhafter Weise derart vorgesehen, daß das Metallband im Querschnitt zwischen seinem Mittelabschnitt und den Längsseiten bei Betrachtung des Querschnitts z-förmig ausgebildet ist. An den Mittelabschnitt des Metallbandes schließt sich dann zu jeder Seite des Mittelabschnitts hin ein winklig abstehender Winkelabschnitt an, von dem aus wiederum sich ein Randabschnitt erstreckt, der im wesentlichen parallel zum Mittelabschnitt des Metallbandes verläuft. In Querschnitt betrachtet weist das Metallband also einen erhabenen bzw. je nach Orientierung des Metallbandes einen abgesenkten vertieften Mittelabschnitt auf, der beidseitig von abstehenden L-förmigen Flanschen begrenzt ist, die die Winkelabschnitte aufweisen, an welche sich einander abweisende parallel zum Mittelabschnitt verlaufende Randabschnitte anschließen. Durch einen sich an diesen Verformungsvorgang anschließenden Säumungsvorgang in einer Besäumungsstation werden die Randabschnitte von den Winkelabschnitten abgetrennt. Damit liegt das geformte Metallband vor, das jetzt noch aus dem Mittelabschnitt und den sich beidseitig anschließenden Winkelabschnitten besteht, die die abgewinkelten Längsränder bilden, welche nach dem Formen des Rohres aneinanderliegen und unmittelbar vor dem Verschweißen auf die gewünschte Länge (Schweißvolumen) gekürzt werden.

Das gemäß obigem Verfahren hergestellte ummantelte Kunststoff-Innenrohr kann der Zwischenstufe bei der Herstellung eines Kunststoff-Metall-Kunststoff-Verbundrohres dienen. Im Anschluß an die Ummantelung des Kunststoff-Innenrohres wird dann auf die Ummantelung eine weitere Kunststoffschicht aufgetragen, die das Kunststoff-Außenrohr bildet. Zwischen dem Kunststoff-Innenrohr und der Metallummantelung sowie zwischen der Metallummantelung und dem Kunststoff-Außenrohr können weitere Kunststoffschichten aufgetragen werden, bei denen es sich um Haftvermittlerschichten handelt. Wegen der bereits nach dem Verschweißen ohne mechanische Nachbehandlung Abflachung der Schweißnaht, deren Außenkontur sich in etwa der Umfangsfläche des Metallbandes in dessen Mittelabschnitt angenähert ist, ist das nachfolgende Auftragen sowohl von der Haftvermittlung als auch der Herstellung des Außenrohres dienenden Kunststoffschichten problemlos möglich, wobei stets geschlossene Schichten entstehen, ohne daß dazu übermäßig viel Kunststoffmaterial im Längsnahtbereich aufgetragen werden muß. Die Außenschichten können also durchaus recht dünn ausgebildet sein, wobei diese Schichten auch noch im Bereich der Längsnaht eine ausreichende Stärke, d.h. Dicke aufweisen.

Nachfolgend wird anhand der Figuren ein Ausführungsbeispiel der Erfindung näher erläutert. Im einzelnen zeigen:
- Fig. 1: eine Seitenansicht einer Anlage zur Herstellung eines Mehrschichtverbundrohres,
- Fig. 2: eine Seitenansicht der Formungs- und Besäumungsvorrichtung für das zur Herstellung des Mehrschichtverbundrohres gemäß Fig. 1 erforderliche Metallband,
- Fign. 3 und 4: Querschnittsansichten des Metallbandes in Höhe der Ebenen III-III und IV-IV der Fig. 1,
- Fign. 5 bis 8: Querschnittsansichten des Innenrohres in Höhe der Ebenen V-V, VI-VI, VII-VII und VIII-VIII der Fig. 1 mit dem um dieses angeordneten bzw. an diesem eng anliegenden Metallband, wobei in den Fign. 6 und 7 auch die Formwerkzeuge zum Halten des Metallbandes unter Anlage der abstehenden Längsränder dargestellt sind,
- Fig. 9: eine vergrößerte Darstellung der Schweißnaht entsprechend dem bei IX eingekreisten Bereich der Fig. 8, wobei die Wurzelbildung der Schweißnaht und die flache Vorwölbung an der Außenseite zu erkennen ist,
- Fign. 10 und 11: Querschnitte durch ein Formrollenpaar und ein Besäumungsrollenpaar einer Formungs- und Besäumungsvorrichtung und
- Fig. 12: einen Querschnitt durch ein alternativ vorgesehenes Formrollenpaar der Formungsvorrichtung gemäß Fig. 1 zur vereinfachten Erzeugung eines U-förmigen Metallbandes mit abgewinkelten Längsrändern.

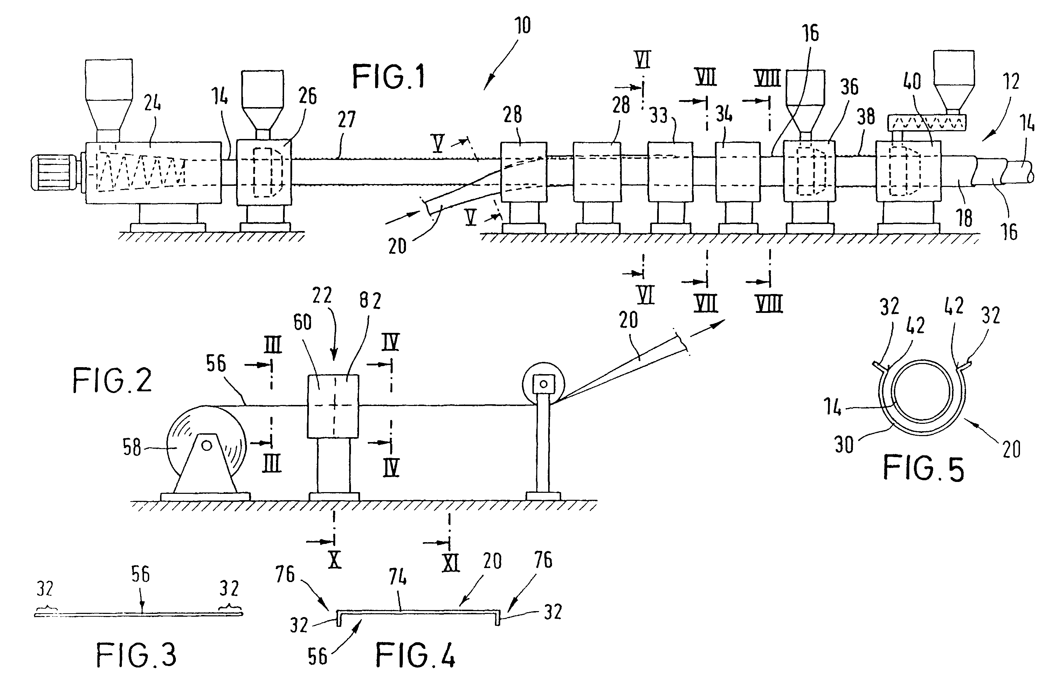

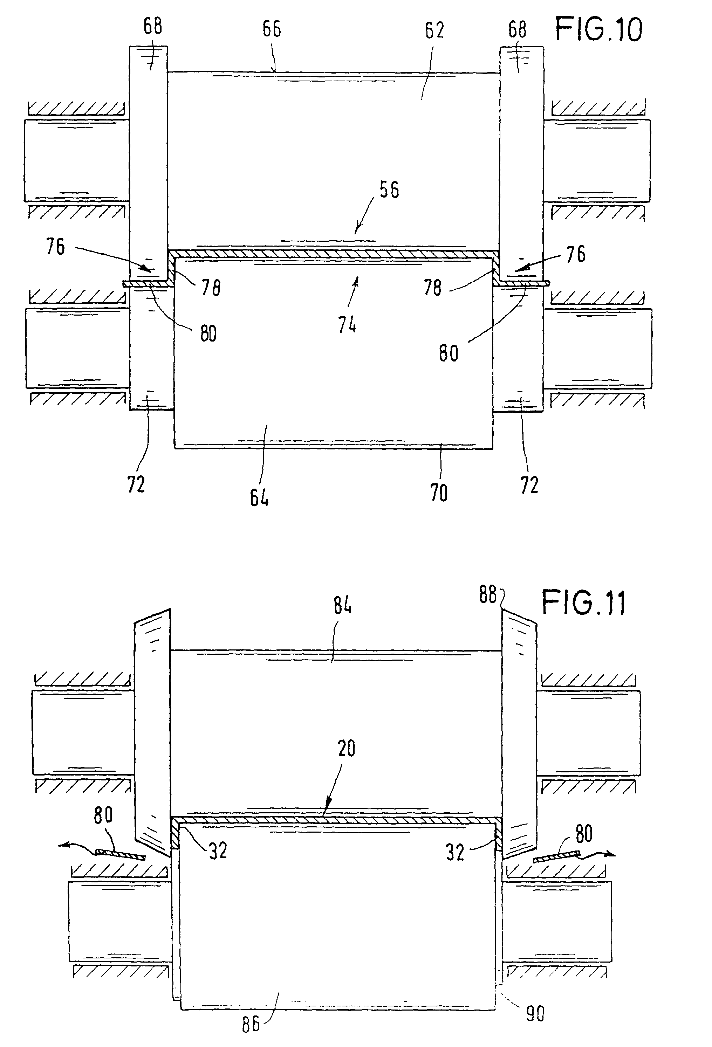

In Fig. 1 ist stark schematisiert eine Anlage 10 zur Herstellung eines Mehrschichtverbundrohres 12 dargestellt, welches ein Kunststoff-Innenrohr 14, eine Metallummantelung 16 für das Kunststoff-Innenrohr 14 und ein außen auf der Metallummantelung 16 aufgebrachtes Außenkunststoffrohr 18 aufweist. Für die Metallummantelung 16 wird ein Metallband 20 verwendet, das in einer Formungs- und Besäumungsvorrichtung 22 mit abstehenden Längsrändern versehen wird. Diese Formungsund Besäumungsvorrichtung 22 ist, ebenfalls stark schematisiert, in Seitenansicht in Fig. 2 dargestellt. Anhand der Fign. 10 bis 12 wird auf die Vorrichtung 22 sowie eine Alternative davon später noch genauer eingegangen werden.

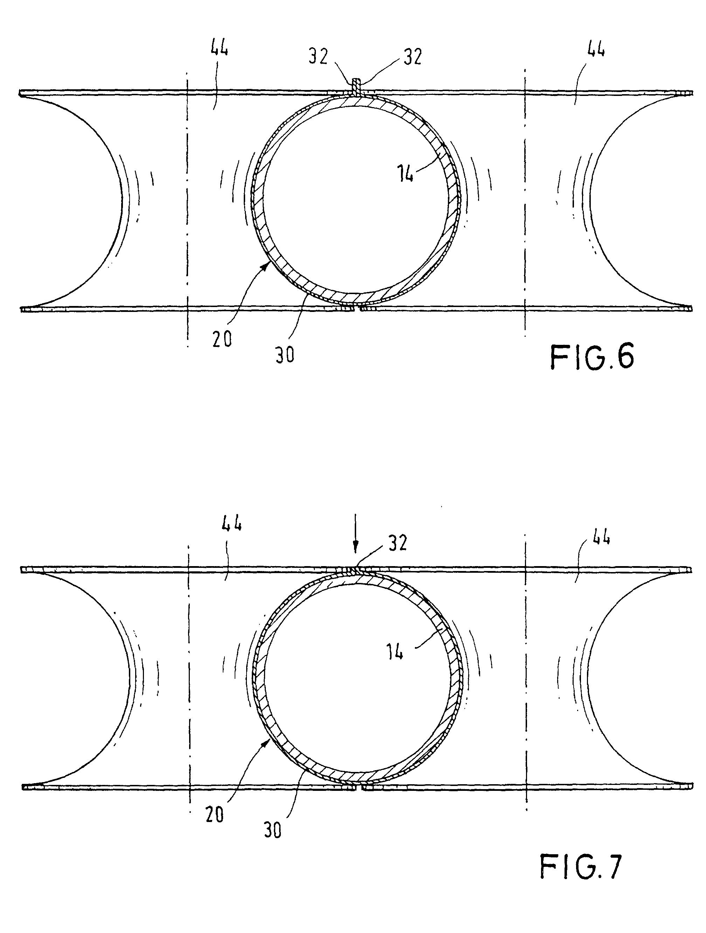

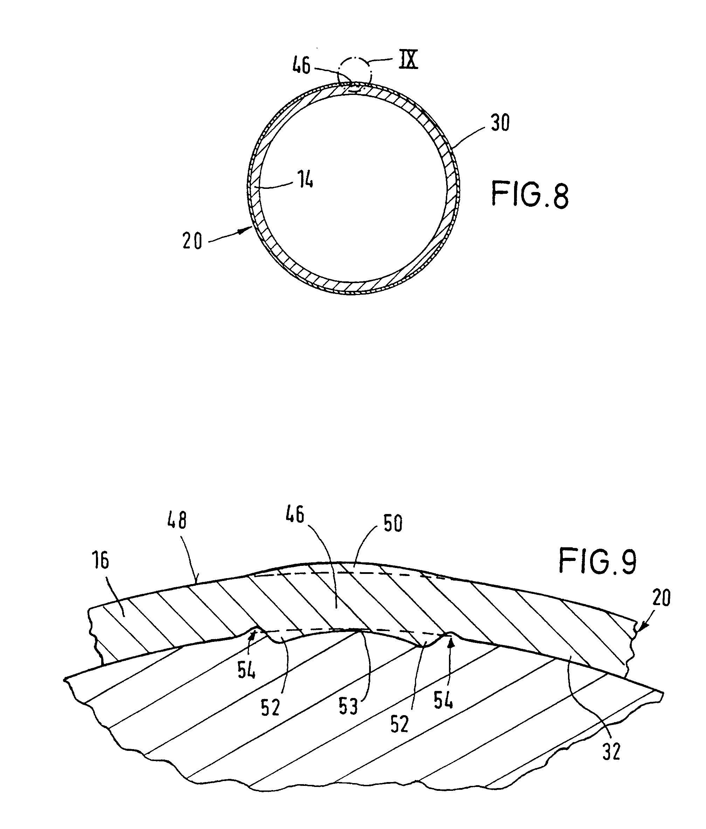

Bei der Anlage 10 wird in an sich bekannter Weise zur Herstellung des Verbundrohres 12 wie folgt verfahren. Zunächst wird mittels eines Extruders 24 das Kunststoff-Innenrohr 14 extrudiert. Auf dieses Innenrohr 14 wird mittels eines weiteren Extruders 26 von außen eine Kunststoffschicht als Haftvermittler 27 aufgetragen. Von der Seite, von unten oder von oben wird hinter dem Extruder 26 ein (Aluminium-)Metallband 20 zugeführt, das mittels Rollenformstationen 28 von außen um das Innenrohr 14 herumgelegt wird. Die Geschwindigkeit, mit der das Metallband 20 zugeführt wird, ist synchron zur Geschwindigkeit gewählt, mit der das Innenrohr 14 extrudiert wird. Wie anhand von Fig. 5 zu erkennen ist, weist das Metallband 20 einen Mittelabschnitt 30 auf, an dessen beiden Längsseiten abstehende Längsränder 32 angeordnet sind. Mittels der Rollenformstationen 28 wird dieses Metallband 20 in Anlage mit dem Innenrohr 14 gebracht und derart um dieses herumgelegt, daß die etwa 90° abstehenden Längsränder 32 in Anlage miteinander gebracht werden. Die derart aneinanderliegenden Längsränder 32 stehen im wesentlichen radial vom Innenrohr 14 ab. Dabei ist der Überstand so groß gewählt, daß sich durch Verschweißen beider Längsränder 32 eine deutliche Verdickung der Metallummantelung im Längsnahtbereich ergäbe. Deshalb werden die aneinanderliegenden Längsränder 32 unmittelbar vor dem Verschweißen in einer Schneidstation 33 beschnitten. Dieser Schnittvorgang erfolgt mechanisch oder berührungslos mittels Lasertechnik. Die Schneidstation 33 befindet sich zwischen den in Herstellungsrichtung letzten Formrollen der Rollenformstation 28 und einer Schweißstation 34 zum Verschweißen der bis auf das zur Verfügungstellung des notwendigen Schweißvolumens (Materialmenge) abgeschnittenen Längsränder 32. Auf diese Verschweißung wird weiter unten noch unter Bezugnahme auf die Fign. 7 bis 9 näher eingegangen. Im Anschluß an die Längsnahtverschweißung (die einander berührenden Längsränder 32 des Metallbandes 20 verlaufen in axialer Erstreckung des Innenrohres 14 bzw. des Verbundrohres 12) wird von außen auf die Metallummantelung 16 mittels eines Extruders 36 eine weitere Kunststoffschicht als Haftvermittler 38 aufgebracht. Mit Hilfe eines weiteren Extruders 40 wird dann auf die Haftvermittlerschicht 38 die Kunststoffschicht für das Kunststoff-Außenrohr 18 aufextrudiert. Durch an sich bekannte Maßnahmen werden die Haftvermittlerschichten 27 und 38 aktiviert bzw. die Kunststoffschichten für die Außen- und Innenrohre 18,14 vernetzt. Hierauf soll an dieser Stelle nicht näher eingegangen werden.

Die Formung des Metallbandes 20 um das Kunststoff-Innenrohr 14 herum bei verhältnismäßig langen abstehenden Längsrändern 32 hat den Vorteil, daß das Metallband 20 mittels der Formrollen mechanisch zuverlässig ergriffen und demzufolge gut geformt werden kann. Das Abschneiden der Längsränder 32 kurz vor dem Verschweißen ist insofern vorteilhaft, als die Schnitt-/ Endflächen der miteinander zu verschweißenden Längsränder 32 dann beim Verschweißen frei von Oxidationsprodukten und Verunreinigungen sind. Das Beschneiden der aneinanderliegenden Längsränder nach dem Formen des Metallbandes 20 zu einem das Kunststoff-Innenrohr 14 umschließenden Rohr und kurz vor dem Verschweißen wirkt sich also in zweifacher Hinsicht vorteilhaft aus.

Wie bereits oben ausgeführt, wird das Metallband 20 derart um das Innenrohr 14 herumgelegt, daß es in seinem Mittelabschnitt 30 vollflächig an der Außenfläche des Innenrohres 14 bzw. an der Haftvermittlerschicht 27 anliegt und sich die in diesem Zustand einander gegenüberliegenden Innenflächen 42 (Fig. 6) der Längsränder 32, die bei geradlinig gestrecktem Metallband 20 die Außenflächen bilden, berühren. Durch entsprechende Form- bzw. Formhalterollen 44 wird das Metallband 20 in diesem Zustand während der Besäumung kurz vor der Verschweißung und während der Verschweißung der Längsränder 32 gehalten (Fign. 6 und 7). Die von der Schweißstation 34 abgegebene Schweißenergie pro Vorschubwegeinheit sowie die durch die Längsränder 32 zur Verfügung gestellte schweißbare Materialmenge (Schweißvolumen), d. h. die Verkürzung der Längsränder 32 in der Schneidstation 33 sind derart gewählt, daß der vor der Verschweißung bestehende und durch mechanische und/oder Laser-Beschneidung entstandene radiale Überstand der Längsränder 32 nach der Verschweißung nicht mehr gegeben ist, die Außenkontur der Schweißnaht 46 also der Außenkontur der Metallummantelung 16 im übrigen Bereich des Metallbandes 20 angenähert ist. Einen Querschnitt durch die Schweißnaht 46 in vergrößertem Maßstab zeigt Fig. 9. Hier ist zu erkennen, daß die Schweißnaht 46 an ihrer Außenseite eine leichte Vorwölbung 50 aufweist und sich dabei im wesentlichen in die Außenumfangsfläche 48 der Metallummantelung 16 bzw. des Metallbandes 20 einfügt. In Fig. 9 ist die Umfangsfläche 48 im Bereich der Vorwölbung 50 der Schweißnaht 46 gestrichelt ergänzt. Auf der Innenseite der Schweißnaht 46 ist die Wurzel zu erkennen, die zwei Innenvorwölbungen 52 zu beiden Lateralseiten der Schweißnaht und eine dazwischenliegende Vertiefung 53 aufweist. Der Übergang der Innenvorwölbungen 52 der Wurzel zum Mittelabschnitt 32 des Metallbandes 20 ist mit leichten Einkerbungen 54 versehen, deren Tiefe wie die Innenvorwölbungen 52 und die Vertiefung 53 durch das Schweißvolumen und die Schweißenergie bestimmt ist. Durch Wahl der Schweißenergie und Wahl des Schweißvolumens (Höhe der Längsränder 32 und Dicke des Metallbandes 20) läßt sich also das Metallband 20 derart an seinen Längsrändern 32 verschweißen, daß die Schweißnaht 46 eine der Außenkontur der Metallummantelung 16 angepaßte Außenkontur bei ausreichend ausgeprägter Wurzelbildung mit mechanisch zuverlässigem Übergang zum Metallband 20 herstellen, wobei keinerlei mechanische Nachbearbeitungen weder der Schweißnaht 46 noch der Metallummantelung 16 selbst erforderlich sind. Dies wirkt sich ganz entscheidend auf eine Reduktion der Produktionskosten aus, da einerseits Verfahrensschritte bzw. Behandlungsschritte eingespart werden können und andererseits wegen der Möglichkeit, die Metallummantelung zuverlässig zu verschweißen, dünnere Metallbänder eingesetzt werden können.

Nachfolgend soll auf das Verfahren zur Herstellung eines Metallbandes mit abgewinkelten Längsrändern eingegangen werden. Dieses Metallband 20 wird ausgehend von einem flachen ebenen breiteren Metallband 56 geformt, das auf einem Wickel 58 aufgewickelt ist (s. Fig. 2). Mittels eines Rollenpaars 60 wird dem Metallband 56 das im Querschnitt in Fig. 4 dargestellte Profil verliehen. Die beiden Rollen 62,64 des Rollenpaars 60 liegen beidseitig (also von der Oberseite und der Unterseite) an dem Metallband 56 an und weisen zueinander komplementäre Umfangsflächen auf (Fig. 10). Durch Einführen des Metallbandes 56 in den Zwischenraum zwischen die beiden um parallele Achsen drehbar gelagerten Formrollen 62,64 wird das Metallband 56 gedrückt und damit geformt, so daß es einen Querschnitt gemäß Fig. 10 erhält. Während die Formrolle 62 eine sich nahezu über die gesamte axiale Länge erstreckende Vertiefung 66 mit stufenförmigen Erhöhungen 68 an den axialen Enden aufweist, ist die Umfangsfläche der Formrolle 64 mit einer Umfangserhöhung 70 und abgestuften sowie im Durchmesser reduzierten axialen Enden 72 versehen. Charakteristisch für das Profil bzw. den Querschnitt des Metallbandes 56 ist der ebene Mittelabschnitt 74, an den sich beidseitig L-förmige Flansche 76 an den Längsseiten des Metallbandes 56 anschließen, wie es in Fig. 10 dargestellt ist. Jeder L-förmige Flansch 76 weist einen ersten kurzen Schenkel 78 auf, der mit dem Mittelabschnitt 74 verbunden ist und von diesem im wesentlichen rechtwinklig absteht. An diesen kurzen Schenkel 78 (auch Winkelabschnitt genannt) schließt sich ein zweiter längerer Schenkel 80 (nachfolgend auch Randabschnitt genannt) an, der sich parallel zum Mittelabschnitt 74 erstreckt und um die Länge des Winkelabschnitts 78 höhenversetzt zum Mittelabschnitt 74 ist.

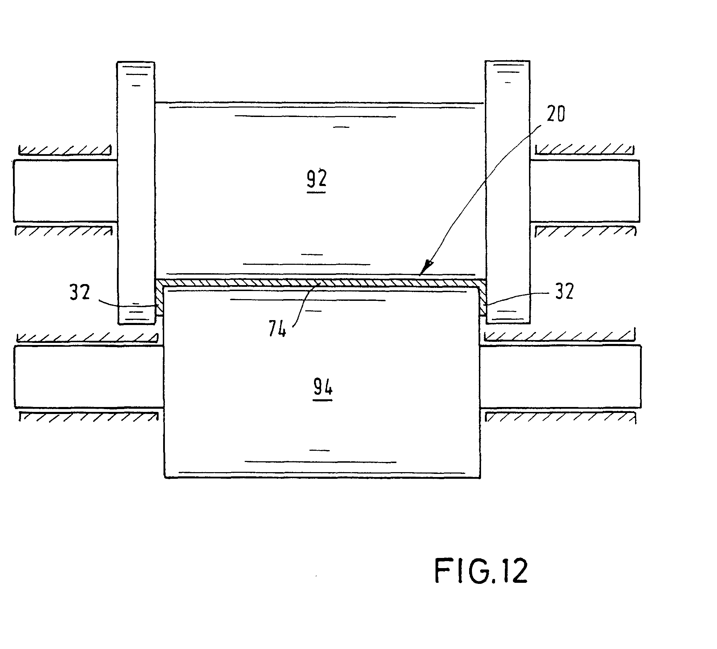

Das derart durch Drücken geformte Metallband 56 wird einer Besäumungsrollenpaar 82 der Rollenformstation 22 zugeführt, die zwei beidseitig des Metallbandes 56 anliegende Rollen 84,86 aufweist (siehe Fig. 11). Die Rolle 84, die - in der Darstellung gemäß Fig. 4 - von oben an dem Metallband 56 anliegt, weist zu beiden Seiten der Winkelabschnitte 78 angeordnete radial abstehende und umlaufende Schneidkanten 88 auf, die zum Abtrennen der Randabschnitte 80 der L-förmigen Flansche 76 dienen. Während die obere (Besäumungs-)Rolle 84 eine zurückspringende mittlere Umfangsfläche und beidseitig von dieser angrenzend die abstehenden Schneidkanten 80 aufweist, ist die untere Rolle 86 (Gegenrolle) an ihren axialen Enden mit einer Abstufung 90 versehen. Die Bemessung der Abstufung 90 ist so gewählt, daß die Rolle 86 an den Winkelabschnitten 78 anliegt und zusätzlich am längeren Schenkel 80 des L-förmigen Flansches 76 um die Stärke des Metallbandes anliegt. Damit bildet die sich aus der Abstufung ergebende Fläche und die übrige Umfangsfläche der Rolle 86 im Bereich der Winkelabschnitte 78 eine Gegenfläche zum Stützen des Metallbandes 56 beim Besäumungsvorgang. Das Profil des beschnittenen Metallbandes 56 ist in Fig. 4 dargestellt, wobei die abgetrennten Randabschnitte 80 gestrichelt dargestellt sind. Dieses Profil des Metallbandes entspricht dem bereits oben beschriebenen Metallband 20, das dann im Falle dieses Ausführungsbeispieles von unten an das Kunststoff-Innenrohr 14 herangeführt und um dieses gelegt wird, was bereits oben beschrieben ist. Der Vorteil der Herstellung des Metallbandes 20 mit abgewinkelten Längsrändern 32 gemäß Fign. 11 und 12 ist darin zu sehen, daß beide Längsränder 32 auch dann gleiche Breite aufweisen, wenn das Metallband 56 nicht zentriert zu den Rollenpaaren 60 und 82 geführt verläuft. Die gleiche Breite beider Längsränder 32 ist im Zusammenhang und dem Umlegen des Metallbandes 20 und das Innenrohr 14 mittels der Formrolle 28 von Vorteil.

Es ist auch möglich, die abgewinkelten Längsränder 32 des Metallbandes 20 durch einen einzigen Abwinkelungsvorgang zu realisieren, ohne daß eine Stufe (L-förmiger Flansch) entsteht. Diese Alternative zeigt Fig. 12, wobei das Ausgangs-Metallband 56 zwischen zwei Formrollen 92,94 einer zur Rollenformstation 22 alternativen Formstation verläuft und zu dem im Querschnitt U-förmigen Metallband 20 mit Mittelabschnitt 74 und zwei um 90° abgewinkelten Längsrändern 32 geformt wird.

## Patentansprüche

1. Verfahren zum Ummanteln eines Kunststoffrohres mit einem Metallband, bei dem
- die Längsränder (32) eines durch eine Besäumungsvorrichtung (22) geführten Metallbandes (20) um im wesentlichen 90° abgewinkelt werden,
- das mit den abgewinkelten Längsrändern (32) versehene Metallband (20) unter Formung zu einem Rohr mit in axialer Richtung verlaufenden Längsrändern (32) um ein Kunststoff-Innenrohr (14) herumgelegt wird, wobei die abgewinkelten Längsränder (32) einander berühren und im wesentlichen radial abstehen, und
- die Längsränder (32) miteinander verschweißt werden, wobei das Volumen der abgewinkelten Längsränder (32) und die Schweißenergie derart gewählt werden, daß das an einer Längsnaht (46) verschweißte Metallband (20) nach dem Verschweißen im Bereich der Längsnaht (46) eine im wesentlichen in der Außenumfangsfläche (48) der Metallummantelung (16) liegende Außenfläche (50) aufweist,
**dadurch gekennzeichnet ,**
- daß das Volumen der abgewinkelten Längsränder (32) nach Herumlegen des abgewinkelten Metallbandes (20) um das Kunststoff-Innenrohr (14) durch Besäumen der aneinander anliegenden, abgewinkelten Längsränder (32) eingestellt wird.

2. Verfahren nach Anspruch 1, dadurch gekennzeichnet, daß die Besäumung durch mechanisches oder berührungsloses Abschneiden der radial außenliegenden Endabschnitte der Längsränder (32) erfolgt.

3. Verfahren nach Anspruch 1 oder 2, dadurch gekennzeichnet, daß die Außenfläche (50) der Längsnaht (46) nach der Verschweißung leicht vorgewölbt ist.

4. Verfahren nach einem der Ansprüche 1 bis 3, dadurch gekennzeichnet, daß die Längsnaht (46) an der Innenseite zwei Vorwölbungen (52) aufweist, zwischen denen sich ein Vertiefung (53) befindet.

5. Verfahren nach einem der Ansprüche 1 bis 4, dadurch gekennzeichnet, daß das mit den abstehenden Längsrändern (32) versehene Metallband (20) durch Formen von L-förmigen Flanschen (76) an den Längsseiten eines Ausgangsmetallbandes (56) gebildet wird, wobei an jeder Längsseite von einem Mittelabschnitt (74) des Ausgangsmetallbandes (56) ein erster Schenkel (78) des L-förmigen Flansches (76) absteht, von dem aus sich ein parallel zum Mittelabschnitt verlaufender zweiter Schenkel (80) des L-förmigen Flansches (76) erstreckt, und daß nach der Verformung der Längsseiten des Ausgangsmetallbandes (56) die zweiten Schenkel (80) von den ersten Schenkeln (78) abgetrennt werden, so daß die ersten Schenkel (78) die Längsränder (32) des verbleibenden Metallbandes (20) sind.

6. Verfahren nach Anspruch 5, dadurch gekennzeichnet, daß das Ausgangsmetallband (56) zum Formen der L-förmigen Flansche (76) an seinen Längsseiten in den Zwischenraum zwischen die Umfangsflächen (66,68,70,72) zweier Formrollen (62,64) mindestens eines Rollenpaares geführt wird, wobei die Formrollen (62,64) komplementäre Umfangs-Formflächen zur beidseitigen Anlage an dem Ausgangsmetallband (56) aufweisen.

7. Verfahren nach Anspruch 6, dadurch gekennzeichnet, daß die eine Formrolle (64) eine umlaufende Mittenerhöhung und die andere Formrolle (62) eine umlaufende Mittenvertiefung in der Umfangsformfläche aufweist.

8. Verfahren nach Anspruch 5 oder 6 dadurch gekennzeichnet, daß die Abtrennung eines zweiten Schenkels (80) eines L-förmigen Flansches (76) des Ausgangsmetallbandes (56) durch ein Besäumungsrollenpaar mit einer Schneidrolle (84) und einer Gegenrolle (86) erfolgt, wobei die Schneidrolle (84) am Mittelabschnitt (74) und an einem ersten Schenkel (78) eines L-förmigen Flansches (76) des Ausgangsmetallbandes (56) anliegt und die Gegenrolle (86) an dem Mittelabschnitt (74), einem ersten Schenkel (78) eines L-förmigen Flansches (76) und über die Dicke des Ausgangsmetallbandes (56) an einem zweiten Schenkel (80) eines L-förmigen Flansches (76) anliegt.

## Claims

1. A method for sheathing a plastic tube with a metal sheathing, wherein
- the longitudinal edges (32) of a metallic band (20) passed through a trimming device (22) are angled at substantially 90°,
- the metallic band (20) provided with the angled longitudinal edges (32) is formed into a tube with axially extending longitudinal edges (32) and placed around a plastic inner pipe (14), the angled longitudinal edges (32) abutting and extending substantially radially, and
- the longitudinal edges (32) are welded together, the volume of the angled longitudinal edges (32) and the welding energy being chosen such that, after welding, the metallic band (20) welded along a longitudinal seam (46) has an outer surface (50) in the area of the longitudinal seam (46) that is located substantially within the outer circumferential surface (48) of the metallic sheathing (16),
characterized in that
- the volume of the angled longitudinal edges (32) is adjusted after placing the angled metallic band (20) around the plastic inner pipe (14), the adjustment being effected by trimming the abutting angled longitudinal edges (32).

2. The method of claim 1, wherein the trimming is done by mechanically or contactlessly cutting the radially outer end section of the longitudinal edges (32).

3. The method of claim 1 or 2, wherein the outer surface (50) of the longitudinal seam (46) is slightly bulged after welding.

4. The method of one of claims 1 to 3, wherein the longitudinal seam (46) has two bulges (52) on the interior with an indentation (53) therebetween.

5. The method of one of claims 1 to 4, wherein the metallic band (20) provided with projecting longitudinal edges (32) is formed by defining L-shaped flanges (76) at the longitudinal sides of an initial metallic band (56), a first leg (78) of the L-shaped flange (76) projecting from a middle section (74) of the initial metallic band (56) on each longitudinal side, a second leg (80) of the L-shaped flange (76) extending from said first leg (78) in parallel to the middle section, and wherein the second legs (80) are separated from the first legs (78) after the deformation of the longitudinal sides of the initial metallic band (56) so that the first legs (78) are the longitudinal edges (32) of the remaining metallic band (20).

6. The method of claim 5, wherein the initial metallic band (56) is guided into the clearance between the peripheral surfaces (66, 68, 70, 72) of two molding rolls (62, 64) of at least one pair of rolls in order to mold the L-shaped flanges (76) on its longitudinal sides, the molding rolls (62, 64) comprising complementary peripheral molding surfaces for engaging the initial metallic band (56) on both sides.

7. The method of claim 6, wherein the one molding roll (64) has a circumferential raised central part and the other molding roll (62) has a circumferential central deepening in their respective peripheral molding surfaces.

8. The method of claim 5 or 6, wherein the separation of a second leg (80) of an L-shaped flange (76) of the initial metallic band (56) is effected by a pair of trimming rolls comprising a cutting roll (84) and a counter roll (86), the cutting roll (84) engaging on a middle section (74) and on a first leg (78) of an L-shaped flange (76) of the initial metallic band (56) and the counter roll (86) engaging on the middle section (74), a first leg (78) of an L-shaped flange (76) and, across the thickness of the initial metallic band(56), on a second leg (80) of an L-shaped flange (76).

## Revendications

1. Procédé pour envelopper un tube plastique d'une bande métallique, dans lequel
- les bords longitudinaux (32) d'une bande métallique (20) guidée dans un dispositif pour appliquer un rebord (22) sont coudés essentiellement à 90°,
- la bande métallique (20) pourvue de bords longitudinaux (32) coudés est placée autour d'un tube intérieur plastique (14) en formant un tube avec des bords longitudinaux (32) s'étendant dans le sens axial, les bords longitudinaux (32) coudés se touchant et s'écartant essentiellement de manière radiale, et
- les bords longitudinaux (32) sont soudés ensemble, le volume des bords longitudinaux (32) coudés et l'énergie de soudage étant choisis de telle manière que la bande métallique (20) soudée en une soudure longitudinale (46) présente, après le soudage, dans la région de la soudure longitudinale (46), une surface extérieure (50) se trouvant essentiellement dans la surface périphérique extérieure (48) de l'enveloppe métallique (16),
caractérisé en ce que
- le volume des bords longitudinaux (32) coudés est ajusté après avoir placé la bande métallique (20) coudée autour du tube intérieure plastique (14) en bordant les bords longitudinaux (32) coudés reposant l'un contre l'autre.

2. Procédé selon la revendication 1, caractérisé en ce que le rebord est effectué par une découpe mécanique ou sans contact des sections terminales, radialement extérieures, des bords longitudinaux (32).

3. Procédé selon la revendication 1 ou 2, caractérisé en ce que la surface extérieure (50) de la soudure longitudinale (46) est légèrement renflée après le soudage.

4. Procédé selon une des revendications 1 à 3, caractérisé en ce que la soudure longitudinale (46) présente sur le côté intérieur deux renflements (52) entre lesquels se trouve une dépression (53).

5. Procédé selon une des revendications 1 à 4,
caractérisé en ce que la bande métallique (20) pourvue des bords longitudinaux (32) écartés est formée en formant des brides en forme de L (76) sur les côtés longitudinaux d'une bande métallique de départ (56) et en ce que sur chaque côté longitudinal, une première branche (78) de la bride en forme de L (76) s'écarte d'une section médiane (74) de la bande métallique de départ (56) et une deuxième branche (80) de la bride en forme de L (76) s'étend parallèlement à la section médiane à partir de la première branche (78), et en ce qu'après déformation des côtés longitudinaux de la bande métallique de départ (56), les deuxièmes branches (80) sont séparées des premières branches (78) de sorte que les premières branches (78) sont les bords longitudinaux (32) de la bande métallique (20) qui reste.

6. Procédé selon la revendication 5, caractérisé en ce que la bande métallique de départ (56) est guidée dans l'espace intermédiaire entre les surfaces périphériques (66, 68, 70, 72) de deux rouleaux de formation (62, 64) d'au moins une paire de rouleaux, pour former la bride en forme de L (76) sur ses côtés longitudinaux, les rouleaux de formation (62, 64) présentant des surfaces de formation périphériques complémentaires à placer des deux côtés sur la bande métallique de départ (56).

7. Procédé selon la revendication 6, caractérisé en ce que ledit un rouleau de formation (64) présente un rehaussement médian circulaire et l'autre rouleau de formation (62) présente une dépression médiane circulaire dans la surface de formation périphérique.

8. Procédé selon la revendication 5 ou 6, caractérisé en ce que la séparation d'une deuxième branche (80) d'une bride en forme de L (76) de la bande métallique de départ (56) est effectuée par une paire de rouleaux à border avec un rouleur coupant (84) et un contre-rouleau (86), le rouleau coupant (84) reposant contre la section médiane (74) et contre une première branche (78) d'une bride en forme de L (76) de la bande métallique de départ (56) et le contre-rouleau (86) reposant contre la section médiane (74), une première branche (78) d'une bride en forme de L (76) et contre une deuxième branche (80) d'une bride en forme de L (76) par-dessus l'épaisseur de la bande métallique de départ (56).
